# EUROPEAN PATENT SPECIFICATION

(11) **EP 1 724 156 B1**
(45) Date of publication and mention of the grant of the patent: **05.11.2008**
(21) Application number: 06114123.0
(22) Date of filing: 17.05.2006
(51) Int. Cl.: B60R 7/08

(54) **Set of baggage holders**
Set von Gepäckträgern
Ensemble de porte-bagages

(30) Priority: 18.05.2005 SE 0501131
(43) Date of publication of application: 22.11.2006
(73) Proprietor: GM Global Technology Operations, Inc., Detroit, MI 48265-3000 (US)
(72) Inventor: Frischer, Ivar, S-411 25, Göteborg (SE); Hörnström, Urban, S-461 73, Trollhättan (SE)
(74) Representative: Strauss, Peter

(56) References cited:
- EP-A- 1 526 039
- CA-A1- 2 268 240
- FR-A- 2 815 915
- GB-A- 2 336 345
- US-A1- 2004 124 222
- US-B1- 6 502 731

## Description

### Field of the Invention

The present invention relates to a set of baggage holders comprising an elongate central portion which is partly grasped by a holding means with an arcuate engaging portion, which holding means also has a holding portion, the holding means being movable along and rotatably arranged on the central portion.

### Background Art

In the trunk of most cars the space, that is in this case the floor, is sufficient to accommodate a number of carrier bags and in most cases even larger. When driving a loaded vehicle, these carrier bags therefore usually "fly" around in the trunk if they are not lashed. A simple variant of lashing is to provide the trunk with hooks on which the carrier bags can be hung. The hooks may in turn, for instance, be suspended by snap action from a round rod. However, these hooks come loose quite easily if subjected to a lateral load. A solution to this problem is the currently frequently used carrier bag holders for vehicles where a hook is instead hung and movably arranged in a T groove, which groove can be an aluminum profile attached to the hatrack of the vehicle. In certain cases, these hanging hooks may however be an obstacle when putting, for instance, large boxes and containers in the trunk.

FR-A-2815915 shows such a set of baggage holders as described above.

### Summary of the Invention

The object of the present invention therefore is to provide a solution to the above problems involving an improved baggage holding device.

According to the invention, this object is achieved by a set of baggage holders of the type stated by way of introduction being given the features that are defined in claim 1.

According to the present invention, a set of baggage holders comprises an elongate central portion which is partly grasped by a holding means with an arcuate engaging portion, which holding means also has a holding portion, the holding means being movable along and rotatably arranged on the central portion, wherein it further comprises an elongate peripheral portion which at least partly surrounds the central portion, at a distance and parallel thereto, and which also partly grasps said arcuate engaging portion in such a manner that the space formed by said distance between the central portion and the peripheral portion forms a guide path which in the cross-sectional plane of the set of baggage holders has a curve corresponding to the arcuate shape of the engaging portion of the holding means. One of the advantages of this design is that it allows the holding means to be rotated and thus, when required, to be turned away so that large objects can be accommodated in the trunk. The combination of a central and a peripheral portion besides reduces the risk that the holding means is unintentionally released when subjected to uneven load.

The central portion and the peripheral portion are suitably interconnected to form a single profile in such a manner that the curved guide path has a closed end and an open end. With this solution, the central portion and the peripheral portion can be made as a single profile, and the mutual location of these portions is already determined in mounting. Still more preferred, the single profile is an extruded aluminum profile which is relatively easy and cost-effective to manufacture.

Moreover the central portion and the peripheral portion are preferably formed, at least at one end of the guide path formed by the central portion and the peripheral portion, with a radius of curvature which differs from the arcuate shape of the holding means to limit the rotation of the holding means relative to the central portion and the peripheral portion. The possibility of rotating the holding means is thus limited to prevent, for instance, the holding means from being turned away when trying to hang a carrier bag. This limitation of rotation is particularly advantageous if the user's other hand cannot be used to assist in hanging up the carrier bag. It is also convenient to have a limitation of rotation in the other direction as well, that is to facilitate unhooking of the carrier bag and preventing the holding means from being turned with the carrier bag. This limitation is especially advantageous when the set of baggage holders is arranged under a hatrack since otherwise, for instance, the opening of a hook can be locked to the hatrack and thus prevent the carrier bag from being removed.

The fact that the holding portion of the holding means is in the shape of a hook is, in terms of manufacture, the simplest and most cost-effective variant of the holding portion.

Preferably the holding means is in the form of an open loop. This affects mainly the design of the central portion and the peripheral portion which will have a more natural design. It is thus also possible to give the holding means the shape of an S.

In a preferred embodiment, the central portion and the peripheral portion are made of aluminum in order to minimize the cost of manufacture.

In order to further minimize the costs, the holding means is in one embodiment made of plastic and most preferably in one piece.

The holding means is suitably made of an inelastic material. This minimizes the risk that the holding means is released from the central and the peripheral portion. A material that is too flexible may result in, for instance, a carrier bag sliding off the "hook" when stretched out. Moreover it may be convenient for the material of the holding means to be such that it cracks when subjected to excessively high loads which may arise, for instance, when suddenly braking a vehicle. This prevents the hatrack from being subjected to excessive loads.

### Brief Description of the Drawings

The invention will in the following be described in more detail by way of an embodiment and with reference to the accompanying drawings.
Figs 1a and 1b are different perspective views of a profile set according to the present invention.
Fig. 1c is a side view of the profile set in Figs 1a and 1b.
Figs 2a, 2b and 2c are side views of a set of baggage holders according to the present invention with the holding means in different positions.
Fig. 3 is a perspective view of an embodiment of a holding means according to the present invention.
Fig. 4 is a perspective view of a set of baggage holders according to the present invention from which carrier bags are suspended.

### Description of a Preferred Embodiment

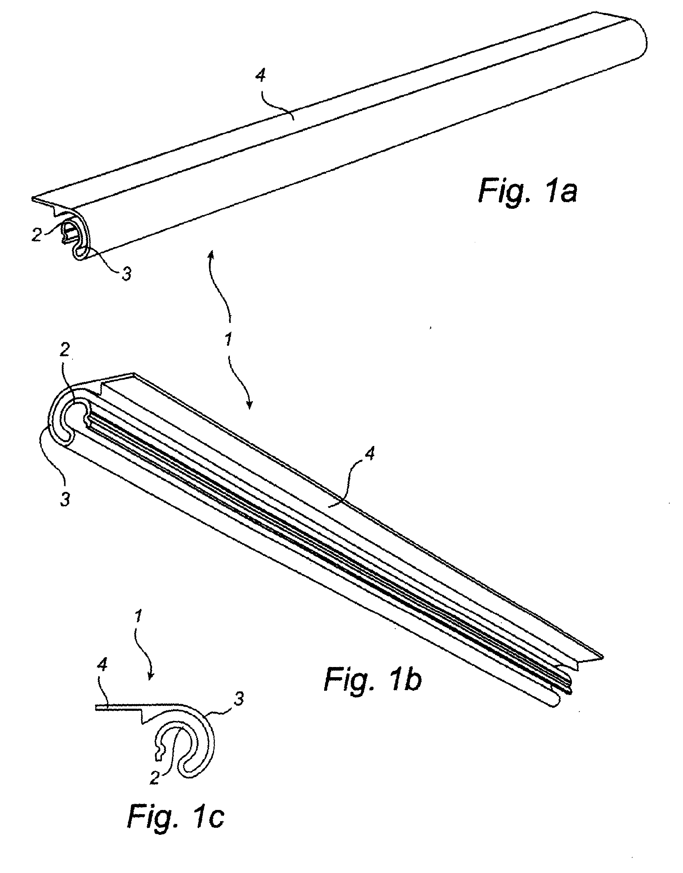

Figs 1a-1c illustrate a profile set 1 according to a preferred embodiment of the invention. The profile set comprises a central portion 2 and a peripheral portion 3 and also a fastening portion 4 for fastening the profile set 1.

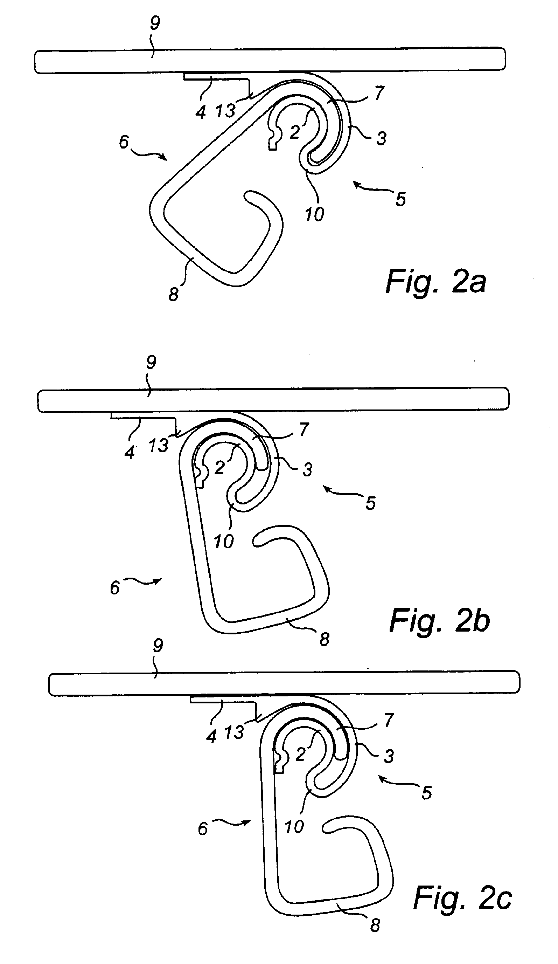

Figs 2a-2c illustrate the entire set of baggage holders 5, that is the profile set 1 and the holding means 6, which holding means further comprises an engaging portion 7 and a holding portion 8. The set of baggage holders is in these Figures mounted on a hatrack 9. The set of baggage holders 5 is arranged in such a manner that the driving direction of the vehicle is to the left as seen in Figs 2a-2c and, thus, the rear of the vehicle is to the right. Fig. 2a illustrates the set of baggage holders 5 when the holding means 6 is practically in its rear (front) position. Here the transition 10 between the central portion 2 and the peripheral portion 3 acts as a stop for the end of the engaging portion 7 of the holding means. Alternatively the stop may consist of the lug 13. The purpose of a stop at this angle is that it should be easy to use one hand to hang, for instance, a carrier bag on the holding portion 8 of the holding means 6 without the holding means 6 placing itself parallel to the hatrack 9. When suddenly reducing the speed of the vehicle, such as when braking, the lug 13 can also serve as an indication where the holding means 6 can be broken to prevent the hatrack 9 from being subjected to excessive loads. In a preferred embodiment, the curve of the engaging portion 7 of the holding means is such that, in the end position shown in the Figure, it can be retained in this position by friction against the central portion 2 and/or the peripheral portion. Fig. 2b illustrates the set of baggage holders 5 when the holding means 6 is in its front position where a portion of the holding means 6 abuts against the end of the central portion 2, the extent of said end causing the shape of the guide path, which path is formed by the space between the central portion 2 and the peripheral portion 3, to deviate from the arcuate shape of the engaging portion 7 of the holding means. When, for example, a carrier bag is to be removed from the holding portion 8 of the holding means, it is important that the hook 6 not position itself parallel to the hatrack 9 so that the opening of the holding means is closed. This is thus prevented by the stop which consists of the end of the central portion in the embodiment illustrated. Fig. 2c shows the set of baggage holders 5 when the holding means 6 is in what may be referred to as the normal position. In a preferred embodiment, the holding means 6 is insertable into the guide path only from the side of the profile set 1. This prevents a holding means 6 from inadvertently coming loose from the profile set 1.

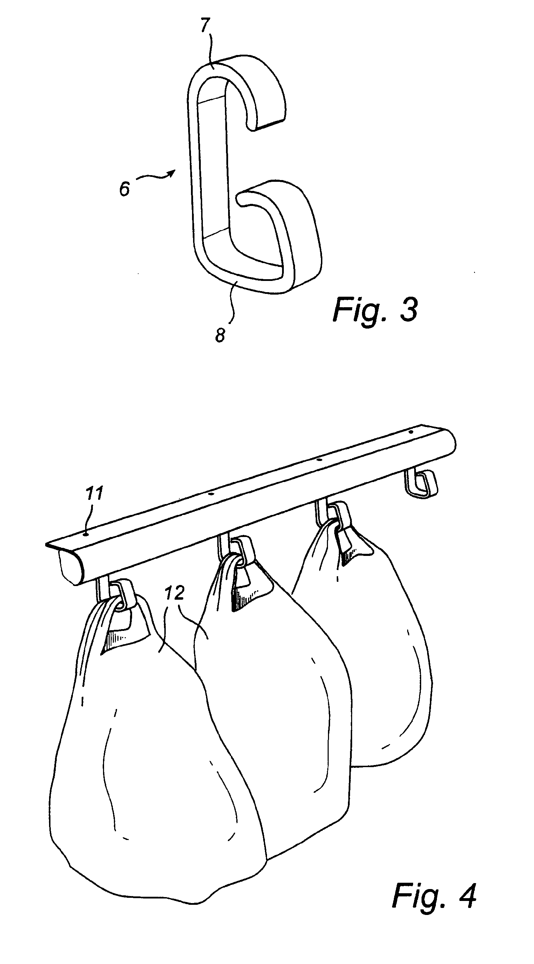

Fig. 3 is a perspective view of the holding means 6. The holding means 6 preferably has a width which exceeds the material thickness of the holding means and still more preferably also exceeds the depth of the guide path, that is the distance between the central portion 2 and the peripheral portion 3. This reduces the risk of the holding means 6 being wedged in the profile set 1 when subjected to a lateral load, that is a lateral load seen in the driving direction of the vehicle. Moreover, lateral displacement of a holding means 6 along the profile set 1 may also be facilitated.

Fig. 4 is a perspective view of a set of baggage holders 5 with carrier bags 12 suspended from the holding means 6. The set of baggage holders 5 is here also provided with holes 11 for fastening to a hatrack for instance. The ends of the profile set are here also provided with stoppers to prevent the holding means 6 from sliding out of the profile set 1.

It will be appreciated that many modifications of the above-described embodiment of the invention are conceivable within the scope of the invention as defined by the appended claims. As for instance described above and illustrated in Figs 2a and 2b, the described end positions, that is the angle of the holding means relative to the profile set 1, of the holding means 6 can be adjusted as desired. Furthermore the holding means 6 may have a holding portion 8 which, as an alternative to a hook, is for instance a clip or one of a female-male coupling.

## Claims

1. A set of baggage holders (5) comprising an elongate central portion (2) which is partly grasped by a holding means (6) with an arcuate engaging portion (7), which holding means (6) also has a holding portion (8), the holding means (6) being movable along and rotatably arranged on the central portion (2), **characterized in that** it further comprises an elongate peripheral portion (3) which at least partly surrounds the central portion (2), at a distance and parallel thereto, and which also partly grasps said arcuate engaging portion (7) in such a manner that the space formed by said distance between the central portion (2) and the peripheral portion (3) forms a guide path which in the cross-sectional plane of the set of baggage holders has a curve corresponding to the arcuate shape of the engaging portion (7) of the holding means.

2. A set of baggage holders (5) as claimed in claim 1, in which said central portion (2) and said peripheral portion (3) are interconnected to form a single profile (1) in such a manner that said curved guide path has a closed end (10) and an open end.

3. A set of baggage holders (5) as claimed in claim 1 or 2, in which the central portion (2) and the peripheral portion (3) are formed, at least at one end of the guide path formed by the central portion (2) and the peripheral portion (3), with a radius of curvature which differs from the arcuate shape of the holding means (6) to limit the rotation of the holding means relative to the central portion (2) and the peripheral portion (3).

4. A set of baggage holders (5) as claimed in any one of claims 1-3, in which the holding portion (8) of the holding means is in the shape of a hook.

5. A set of baggage holders (5) as claimed in claim 4, in which the holding means (6) is in the form of an open loop.

6. A set of baggage holders (5) as claimed in any one of claims 1-5, in which the central portion (2) and the peripheral portion (3) are made of aluminum.

7. A set of baggage holders (5) as claimed in any one of claims 1-6, in which the holding means (6) is made of plastic.

8. A set of baggage holders (5) as claimed in any one of claims 1-7, in which the holding means (6) is made in one piece.

9. A set of baggage holders (5) as claimed in any one of claims 1-8, in which the holding means (6) is made of an inelastic material.

10. A set of baggage holders (5) as claimed in claim 2, in which said single profile (1) is an extruded aluminum profile.

## Patentansprüche

1. Ein Satz Gepäckhalter (5), einen länglichen Mittelteil (2) umfassend, der zum Teil von einem Haltemittel (6) mit einem gebogenen Eingriffsteil (7) erfasst wird, wobei das Haltemittel (6) auch einen Halteteil (8) aufweist, und wobei das Haltemittel (6) an dem Mittelteil (2) entlang bewegt werden kann und drehbar auf dem Mittelteil angeordnet ist, **dadurch gekennzeichnet, dass** er ferner einen länglichen Umfangsteil (3) umfasst, der den Mittelteil (2) in einiger Entfernung von und parallel zu diesem zumindest zum Teil umgibt, und der ebenfalls zum Teil den gebogenen Eingriffsteil (7) auf eine Weise umfasst, dass der durch die Entfernung zwischen dem Mittelteil (2) und dem Umfangsteil (3) gebildete Raum einen Führungsweg bildet, der in der Querschnittsebene des Gepäckhalter-Satzes eine Biegung aufweist, die der gebogenen Form des Eingriffsteils (7) des Haltemittels entspricht.

2. Ein Satz Gepäckhalter (5) nach Anspruch 1, wobei der Mittelteil (2) und der Umfangsteil (3) miteinander verbunden sind, um ein einziges Profil (1) zu bilden, und zwar auf eine Weise, dass der gebogene Führungsweg ein geschlossenes Ende (10) und ein offenes Ende aufweist.

3. Ein Satz Gepäckhalter (5) nach Anspruch 1 oder 2, wobei der Mittelteil (2) und der Umfangsteil (3) zumindest an einem Ende des Führungswegs, der durch den Mittelteil (2) und den Umfangsteil (3) gebildet wird, mit einem Kurvenradius ausgebildet sind, der von der gebogenen Form des Haltemittels (6) abweicht, um die Drehung des Haltemittels in den Bezug auf den Mittelteil (2) und den Umfangsteil (3) zu begrenzen.

4. Ein Satz Gepäckhalter (5) nach einem der Patentansprüche 1 - 3, wobei der Halteteil (8) des Haltemittels die Form eines Hakens aufweist.

5. Ein Satz Gepäckhalter (5) nach Anspruch 4, wobei das Haltemittel (6) die Form eines offenen Aufhängers aufweist.

6. Ein Satz Gepäckhalter (5) nach einem der Patentansprüche 1 - 5, wobei der Mittelteil (2) und der Umfangsteil (3) aus Aluminium bestehen.

7. Ein Satz Gepäckhalter (5) nach einem der Patentansprüche 1 - 6, wobei das Haltemittel (6) aus Kunststoff besteht.

8. Ein Satz Gepäckhalter (5) nach einem der Patentansprüche 1 - 7, wobei das Haltemittel (6) einteilig hergestellt ist.

9. Ein Satz Gepäckhalter (5) nach einem der Patentansprüche 1 - 8, wobei das Haltemittel (6) aus unelastischem Material besteht.

10. Ein Satz Gepäckhalter (5) nach Anspruch 2, wobei das einzige Profil (1) ein extrudiertes Aluminiumprofil ist.

## Revendications

1. Ensemble de porte-bagages (5) comprenant une partie centrale allongée (2) partiellement soutenue par des moyens de support (6) avec une partie enclenchée ayant la forme d'un arc (7) dont les moyens de support (6) sont aussi équipés avec une partie de soutien (8), étant donné que les moyens de support (6) sont mobiles le long de la partie centrale et alignés en rotation sur elle, **caractérisé en ce qu'**ils comprennent en outre une partie périphérique allongée (3) encerclant au moins partiellement, la partie centrale (2) à une certaine distance et en position parallèle, et qui aussi comprend la partie enclenchée susmentionnée ayant la forme d'un arc (7) d'une façon que l'espace formé par la distance susmentionnée entre la partie centrale (2) et la partie périphérique (3) forme une voie d'acheminement qui sur le niveau de la section transversale de l'ensemble de porte-bagages est dotée d'un virage correspondant à la forme arquée de la partie enclenchée (7) des moyens de support.

2. Ensemble de porte-bagages (5) selon revendication 1, étant donné que la partie centrale (2) susmentionnée et la partie périphérique (3) susmentionnée sont connectées l'une avec l'autre pour former un seul profil (1) de telle façon que la voie d'acheminement arquée susmentionnée soit dotée d'une partie finale fermée (10) et d'une partie finale ouverte.

3. Ensemble de porte-bagages (5) selon revendication 1 ou 2, étant donné que la partie centrale (2) et la partie périphérique (3), au moins sur une partie finale de la voie d'acheminement formée par la partie centrale (2) et (continuation de la revendication 3) et la partie périphérique (3), sont formées avec un rayon de courbe qui diffère de la forme arquée des moyens de support (6) pour limiter la rotation des moyens de support en correspondance avec la partie centrale (2) et la partie périphérique (3).

4. Ensemble de porte-bagages (5) selon l'une des revendications 1 - 3, étant donné que la partie de support (8) des moyens de support, possède la forme d'un crochet.

5. Ensemble de porte-bagages (5) selon revendication 4, étant donné que le moyen de support (6) possède la forme d'un passant ouvert.

6. Ensemble de porte-bagages (5) selon l'une des revendication 1 - 5, étant donné que la partie centrale (2) et la partie périphérique (3) sont construites en aluminium.

7. Ensemble de porte-bagages (5) selon l'une des revendications 1 - 6, étant donné que le moyen de support (6) est construit en plastique.

8. Ensemble de porte-bagages (5) selon l'une des revendications 1 - 7, étant donné que le moyen de support (6) est construit en une seule partie.

9. Ensemble de porte-bagages (5) selon l'une des revendications 1 - 8, étant donné que le moyen de support (6) est construit à partir d'un matériel sans élasticité.

10. Ensemble de porte-bagages (5) selon revendication 2, étant donné que le profil séparé (1) susmentionné est construit en un profil extrudé en aluminium.
